# EUROPEAN PATENT APPLICATION

(11) **EP 4 568 118 A1**
(43) Date of publication of application: **11.06.2025**
(21) Application number: 23859261.2
(22) Date of filing: 25.08.2023
(51) Int. Cl.: H04B 1/04, H04B 1/40, H04B 7/0413

(54) **ELECTRONIC DEVICE, AND ANTENNA SYSTEM AND RADIO-FREQUENCY FRONT-END MODULE THEREOF**

(30) Priority: 01.09.2022 CN 202211068006
(71) Applicant: Huawei Technologies Co., Ltd., Shenzhen, Guangdong 518129 (CN)
(72) Inventor: ZHAN, Zhixin, Shenzhen, Guangdong 518129 (CN); HUANG, Weichen, Shenzhen, Guangdong 518129 (CN)
(74) Representative: Gill Jennings & Every LLP
(86) International application number: PCT/CN2023/114973
(87) International publication number: WO 2024/046229

(57) **Abstract**

This application discloses a radio frequency front-end module and an electronic device, and the radio frequency front-end module includes: a switch component, where the switch component includes a first port, a second port, a third port, and a fourth port, the first port is configured to connect to a first antenna, and the second port is configured to connect to a second antenna; and a first filter and a second filter, where an operating frequency band of the first filter is a first frequency band, an operating frequency band of the second filter is a second frequency band, the first filter is connected to the third port of the switch component, and the second filter is connected to the fourth port of the switch component. The first port is capable of being connected to both the third port and the fourth port, to form both a connection path between the first filter and the first antenna and a connection path between the second filter and the first antenna. The second port is capable of being connected to at least one of the third port and the fourth port, to form a connection path between the second antenna and at least one of the first filter and the second filter. The electronic device includes the foregoing radio frequency front-end module.

## Description

This application claims priority to Chinese Patent Application No. 202211068006.3, filed with the China National Intellectual Property Administration on September 1, 2022 and entitled "ELECTRONIC DEVICE, AND ANTENNA SYSTEM AND RADIO FREQUENCY FRONT-END MODULE THEREOF", which is incorporated herein by reference in its entirety.

### TECHNICAL FIELD

This application relates to the field of radio frequency front-end technologies, and in particular, to an electronic device, and an antenna system and a radio frequency front-end module thereof.

### BACKGROUND

As forms of electronic devices are diversified, antennas of the electronic devices are also diversified. For example, a side edge of a bar-type electronic device may support an independent middle frequency band and high frequency band (Middle Frequency Band & High Frequency Band, MHB) antenna. However, for a folded electronic device, because a hinge is disposed on a side edge of the electronic device, a position at which an antenna can be disposed and that is on the side edge becomes smaller. Therefore, a form in which a middle frequency band (Middle Frequency Band, MB) antenna and a high frequency band (High Frequency Band, HB) antenna are separated may be used. In other words, an independent MB antenna and an independent HB antenna are disposed.

To adapt to different forms of an MB antenna and an HB antenna (separate MB and HB antennas) and an MHB antenna (a combined MB and HB antenna), respective front-end architectures are usually adapted to different types of antennas. For an electronic device that adapts to a combined MHB antenna that combines a plurality of antennas, different front-end solutions are required, and a discrete component solution is usually used, which increases a design area of a PCB of the electronic device. Therefore, a front-end architecture that can adapt to electronic devices in different forms is required.

### SUMMARY

An objective of this application is to provide an electronic device, and an antenna system and a radio frequency front-end module thereof.

A first aspect of this application provides a radio frequency front-end module, and the radio frequency front-end module includes:
a switch component, where the switch component includes a first port, a second port, a third port, and a fourth port, the first port is configured to connect to a first antenna, and the second port is configured to connect to a second antenna; and
a first filter and a second filter, where an operating frequency band of the first filter is a first frequency band, an operating frequency band of the second filter is a second frequency band, the first filter is connected to the third port of the switch component, and the second filter is connected to the fourth port of the switch component;
the first port is capable of being connected to both the third port and the fourth port, to form both a connection path between the first filter and the first antenna and a connection path between the second filter and the first antenna; and
the second port is capable of being connected to at least one of the third port and the fourth port, to form a connection path between the second antenna and at least one of the first filter and the second filter.

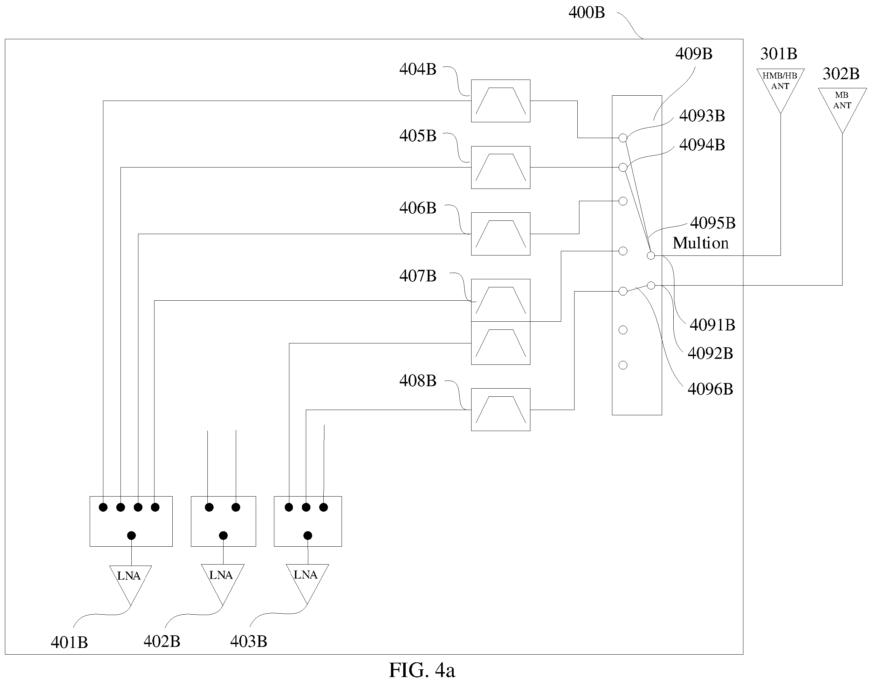

In other words, in this embodiment of this application, the radio frequency front-end module herein may be a front-end architecture shown in FIG. 4a, and the first port and the second port may be respectively connected to the first antenna and the second antenna. The first port or the second port or both support multion (a multion function). When the first port supports multion (a multion function), the first antenna may be an HMB antenna, and the first port may be connected to both the first filter and the second filter. In other words, the first port is capable of being connected to both the third port and the fourth port, to form both the connection path between the first filter and the first antenna and the connection path between the second filter and the first antenna. When the second port supports multion (a multion function), the second antenna may alternatively be an HMB antenna, and the second port may be connected to both the first filter and the second filter. In other words, the second port is capable of being connected to both the third port and the fourth port, to form both a connection path between the first filter and the first antenna and a connection path between the second filter and the first antenna. When the second port supports singleon, the second antenna may be an MB antenna or an HB antenna, and the second port may be connected to the first filter or the second filter. In other words, the second port is capable of being connected to the third port or the fourth port, to form a connection path between the first filter and the second antenna or a connection path between the second filter and the second antenna.

In a possible implementation of the first aspect, an operating frequency band of the first antenna includes the first frequency band and the second frequency band.

In a possible implementation of the first aspect, the second port is capable of being connected to the third port and the fourth port, to form both the connection path between the first filter and the second antenna and the connection path between the second filter and the second antenna.

In a possible implementation of the first aspect, the switch component includes a first switch, the first port is connected to both the third port and the fourth port via the first switch, and the first switch is a double-pole double-throw switch or a double-pole multi-throw switch.

In a possible implementation of the first aspect, the switch component includes a second switch, the second port is connected to at least one of the third port and the fourth port via the second switch, and the second switch is a single-pole double-throw switch or a single-pole multi-throw switch.

In a possible implementation of the first aspect, the first frequency band includes at least one of a 2G frequency band or a 3G frequency band.

In a possible implementation of the first aspect, the second frequency band includes at least one of a 4G frequency band or a 5G frequency band.

In a possible implementation of the first aspect, the switch component, the first filter, and the second filter are configured on a same integrated circuit.

In a possible implementation of the first aspect, the switch component, the first filter, and the second filter are in a form of integrated module. In other words, the switch component, the first filter, and the second filter are integrated into the same integrated circuit. In this way, a layout area of an electronic device can be reduced, and the front-end architecture can adapt to antennas of various forms. This improves adaptability of the front-end architecture to antennas in different forms, so that competitiveness of the electronic device is improved.

A second aspect of this application provides an antenna system, and the antenna system includes:
the radio frequency front-end module and the first antenna according to the first aspect, where the operating frequency band of the first antenna includes the first frequency band and the second frequency band.

A third aspect of this application provides an antenna system, and the antenna system includes:
the radio frequency front-end module, the first antenna, and the second antenna according to the first aspect, where the operating frequency band of the first antenna includes the first frequency band and the second frequency band, and an operating frequency band of the second antenna includes at least one of the first frequency band or the second frequency band.

A fourth aspect of this application provides an electronic device, and the electronic device includes the radio frequency front-end module according to the first aspect.

### BRIEF DESCRIPTION OF DRAWINGS

To describe the technical solutions in specific implementations of the present invention or in the conventional technology more clearly, the following briefly describes the accompanying drawings for describing the specific implementations or the conventional technology. It is clear that the accompanying drawings in the following descriptions show some implementations of the present invention, and a person of ordinary skill in the art may still derive other drawings from these accompanying drawings without creative efforts.
FIG. 1 is a diagram of a structure of an electronic device that includes a front-end architecture according to an embodiment of this application;
FIG. 2 is a diagram of a front-end architecture in a solution using a plurality of discrete components according to an embodiment of this application;
FIG. 3 is a diagram of a front-end architecture in a solution using an integrated module according to an embodiment of this application;
FIG. 4a and FIG. 4b are diagrams of a front-end architecture that adapts to a multi-antenna solution and that is provided in this application according to an embodiment of this application; and
FIG. 5 is a diagram of another front-end architecture that adapts to a multi-antenna solution and that is provided in this application according to an embodiment of this application.

### DESCRIPTION OF EMBODIMENTS

Illustrative embodiments of this application include, but are not limited to, a front-end architecture that adapts to a multi-antenna solution.

To make objectives, technical solutions, and advantages of this application clearer, the following describes technical solutions in embodiments of this application with reference to the accompanying drawings clearly and in detail. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

The following terms "first" and "second" are merely used for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

An "embodiment" mentioned in this application means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this application may be combined with another embodiment.

To make technical solutions and advantages of this application clearer, the following describes technical solutions in embodiments of this application with reference to the accompanying drawings clearly and in detail.

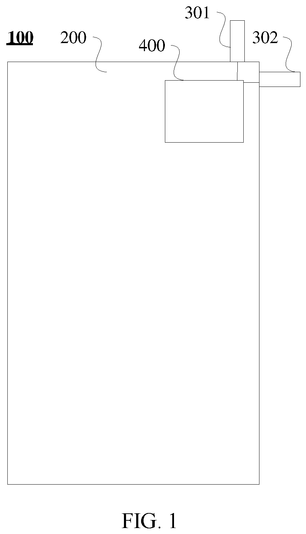

Refer to FIG. 1. FIG. 1 is a diagram of a structure of an implementation of an electronic device 100 according to an embodiment of this application. As shown in FIG. 1, an embodiment of this application provides the electronic device 100, and the electronic device 100 includes a bottom plate 200, an antenna 301, an antenna 302, and a front-end architecture 400 (or referred to as a "radio frequency front-end module").

The antenna 301 and the antenna 302 are connected to the front-end architecture 400. For example, the front-end architecture 400 herein may perform processing such as amplification or filtering on a signal generated by a radio frequency port of the electronic device 100, and may transmit a processed signal to the antenna 301/302. After receiving the radio frequency signal, the antenna 301/302 may send the radio frequency signal to space in a form of electromagnetic wave. In some embodiments, the front-end architecture 400 may also perform processing such as filtering or amplification on a signal received by the antenna 301/302, and transmit a processed signal to a baseband processor for processing. For example, the front-end architecture 400 is disposed on the bottom plate 200 of the electronic device 100. The bottom plate 200 herein may be a PCB (Printed Circuit Board, printed circuit board).

In this embodiment of this application, an example in which the electronic device 100 is a smartphone is used for description. Certainly, a person skilled in the art may understand that in another alternative implementation, the electronic device 100 may alternatively be another electronic device such as a tablet computer or a smartwatch. This does not limit the protection scope of this application herein.

In this embodiment of this application, the antenna 301 and the antenna 302 may be formed by using a metal frame of the electronic device 100, or may be a metal sheet (for example, a steel sheet), or may be a flexible printed circuit (Flexible Printed Circuit, FPC for short), or may be formed in a form of LDS (Laser Direct Structuring, laser direct structuring).

A person skilled in the art may understand that the embodiment shown in FIG. 1 is merely described by using an example in which the electronic device 100 includes two groups of antennas. In another alternative embodiment, the electronic device 100 may alternatively include three or more groups of antennas that are spaced apart. This does not limit the protection scope of this application herein. Each antenna group includes one or more antennas, and each antenna group may receive and send an electromagnetic wave signal in a specified frequency band range (for example, a Wi-Fi protocol frequency band or an LTE protocol frequency band).

In addition, based on the antenna reciprocity theorem, the electronic device structure provided in this embodiment of this application may be used in a process in which an antenna receives an electromagnetic wave, or may be used in a process in which an antenna sends an electromagnetic wave. The following uses the process in which an antenna receives an electromagnetic wave as an example for description.

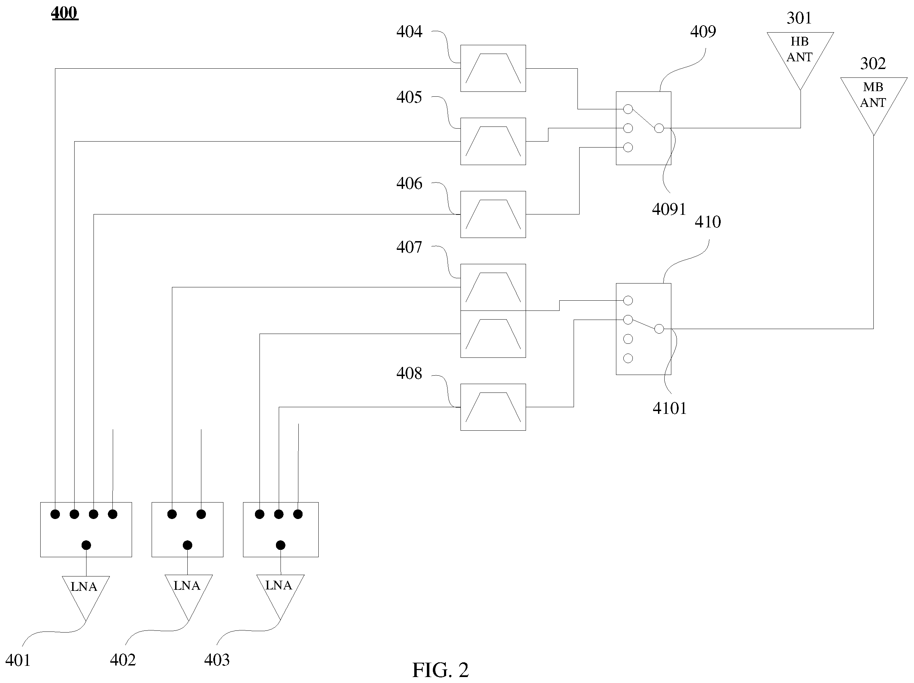

FIG. 2 is a diagram of a front-end architecture 400 corresponding to an antenna 301 and an antenna 302 of an electronic device 100. The front-end architecture 400 shown in FIG. 2 includes an amplifier 401/402/403, a filter 404/405/406/407/408, a switch component 409, and a switch component 410. The amplifier, the filter, and the switch component in FIG. 2 are in a form of a plurality of discrete components. In other words, the amplifier, the filter, and the switch component are separately disposed on a bottom plate 200 of the electronic device 100 as independent components. In embodiments of this application, the switch component may also be referred to as an antenna switch module (Antenna Switch Module, ASM).

In some embodiments, the amplifier 401/403 and the filter 403/408 shown in FIG. 2 are used as an example. The amplifier 401/403 may be a low noise amplifier (Low Noise Amplifier, LNA), the filter 404 may be a high-frequency filter, and the filter 408 may be a middle-frequency filter. It can be learned that the switch component 409 and the switch component 410 only support one port for inputting an antenna signal. For example, for the switch component 409, only a port 4091 is supported for inputting an antenna signal; and for the switch component 410, only a port 4101 is supported for inputting an antenna signal. It may be understood that, in a process in which an antenna sends an electromagnetic wave, the port 4091/4101 is configured to output a signal to the antenna 301/302.

For example, an antenna receives a signal. The signal received by the antenna may pass through a switch component connected to the antenna and then be filtered by a filter connected to the switch before being transmitted to an amplifier. In FIG. 2, a middle frequency band signal and a high frequency band signal are received and sent by different antennas. In other words, an MB antenna (the antenna 302) and an HB antenna (the antenna 301) are separate antennas. It may be understood that the MB antenna (the antenna 302) of the electronic device 100 may be combined with another antenna like a Wi-Fi antenna of the electronic device. In other words, the MB antenna (the antenna 302) and the another antenna like the Wi-Fi antenna may be a same antenna, to reduce a quantity of antennas.

For example, still refer to FIG. 2. A high frequency band signal received by the antenna 301 is transmitted to the filter 404 via the switch component 409, and a filtered signal is transmitted to the amplifier 401. Similarly, a middle frequency band signal received by the antenna 302 is transmitted to the filter 408 via the switch component 410, and a filtered signal is transmitted to the amplifier 403.

For example, output ports supported by the switch component 409 and the switch component 410 may be single-pole single-throw switches or single-pole multi-throw switches.

However, in the embodiment shown in FIG. 2, a solution in which the amplifier, the filter, and the antenna switch module are a plurality of discrete components is used, and consequently, an antenna power gain has a performance deviation of 0.5 dB to 1 dB. In addition, use of the discrete components increases a layout area of a terminal device. Consequently, circuit design costs and design difficulty are increased, which reduces competitiveness of the terminal product.

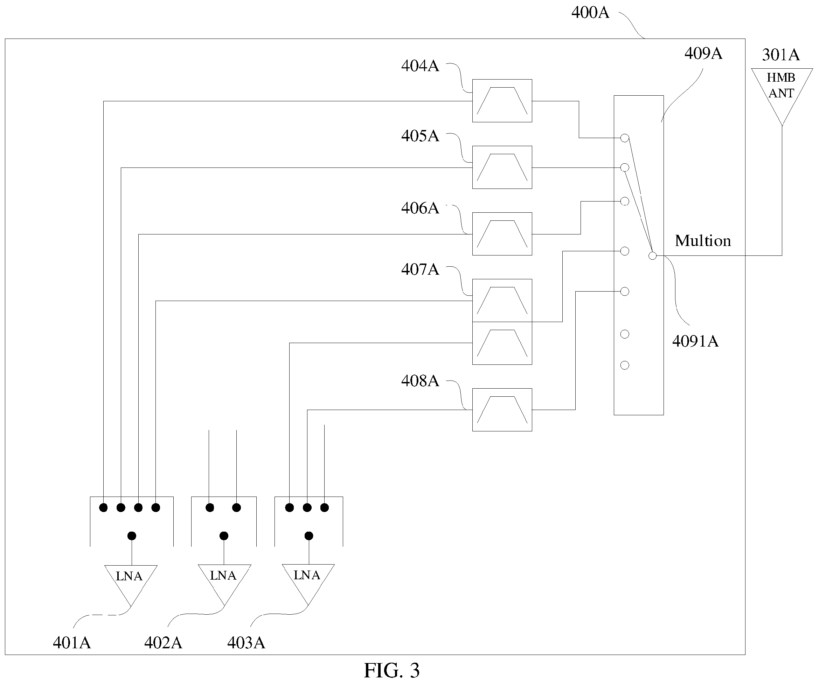

For example, FIG. 3 is a diagram of a front-end architecture 400A corresponding to an antenna 301A of another electronic device 100A. The front-end architecture 400A shown in FIG. 3 includes an amplifier 401A/402A/403A, a filter 404A/405A/406A/407A/408A, and a switch component 409A.

In some embodiments, the amplifier, the filter, and the switch component in FIG. 3 are in a form of integrated module. The switch component 409A may support one port (namely, a port 4091A) for inputting an antenna signal, and the port 4091A may support multion (a multion function). In other words, the switch component 409A may be connected to both the filter 404A and the filter 405A. In the filter 404A and the filter 405A, the filter 404A may be a high-frequency filter, and the filter 405A may be a middle-frequency filter. The antenna 301A may be an HMB antenna. In other words, a middle frequency band signal and a high frequency band signal are received and sent by a same antenna, namely, a combined antenna that combines an MB antenna with an HB antenna.

For example, still refer to FIG. 3. Middle frequency band and high frequency band (HMB) signals received by the antenna 301A are transmitted to the filter 404A and the filter 405A via the switch component 409A, and filtered signals are transmitted to the amplifier 401A.

However, in the embodiment shown in FIG. 3, the port of the switch component 409A supports multion (a multion function). In other words, multi-carrier aggregation (Carrier Aggregation, CA) function is implemented by using the multion (Multion) function of the switch component 409A, to meet a requirement of the multi-CA function with a combined antenna that combines an MB antenna with an HB antenna. However, the switch component 409A supports only one port (namely, the port 4091A). In other words, connection to only one group of antennas or one antenna is supported. Therefore, for an electronic device in the front-end architecture shown in FIG. 3, an MB antenna and an HB antenna need to be in a combined antenna form. In other words, for an electronic device in which an MB antenna and an HB antenna are separate antennas, if the front-end architecture shown in FIG. 3 is used, the MB antenna and the HB antenna each need to be independently configured with the front-end architecture shown in FIG. 3. This imposes a large constraint on a design of an entire architecture of the electronic device. For antennas in different forms, design of the front-end architecture in FIG. 3 is not flexible enough. In other words, adaptability to the antennas of different forms is not high enough, and costs of configuring a plurality of front-end architectures are high.

To resolve the foregoing problems of flexibility of the front-end architecture and manufacturing costs of the electronic device, in embodiments of this application, a front-end architecture (or referred to as a "radio frequency front-end module") includes: a switch component, where the switch component includes a first port, a second port, a third port, and a fourth port, the first port is configured to connect to a first antenna, and the second port is configured to connect to a second antenna; and a first filter and a second filter, where an operating frequency band of the first filter is a first frequency band, an operating frequency band of the second filter is a second frequency band, the first filter is connected to the third port of the switch component, and the second filter is connected to the fourth port of the switch component; the first port is capable of being connected to both the third port and the fourth port, to form both a connection path between the first filter and the first antenna and a connection path between the second filter and the first antenna; and the second port is capable of being connected to at least one of the third port and the fourth port, to form a connection path between the second antenna and at least one of the first filter and the second filter.

In other words, in this embodiment of this application, the first port supports a multion (Multion for short below) function, and the second port supports at least a singleon function. The singleon function herein may be a function of the port to only connect one path (the switch component to connect one path), to meet a function requirement of separate MB and HB antennas.

The front-end architecture that adapts to a plurality of antennas and that is provided in this embodiment of this application can meet a function requirement of multi-CA with a function of a combined MB and HB antenna, and can also meet a function requirement of separate MB and HB antennas. Therefore, the front-end architecture may be adapted to antenna arrangement solutions of different electronic devices or user equipment (User Equipment, UE), for example, may be adapted to a bar-type device and a foldable device. In some embodiments, the first port may alternatively support the singleon function. In some other embodiments, the second port may alternatively support the multion function.

In some embodiments, the front-end architecture is integrated into a same integrated circuit, so that a layout area of the electronic device can be reduced. In addition, the front-end architecture can adapt to antennas of various forms. This improves adaptability of the front-end architecture to antennas in different forms, to improve competitiveness of the electronic device.

In this application, a high frequency band (used as a "first frequency band") and a middle frequency band (used as a "second frequency band") are relative concepts, provided that a frequency of the high frequency band is greater than a frequency of the low frequency band. Based on this, specific values of the high frequency band and the low frequency band are not limited in this application. In some embodiments, the high frequency band may be a 4G frequency band or a 5G frequency band, and the middle frequency band may be a 2G frequency band or a 3G frequency band. In some embodiments, the middle frequency band may be 450 MHz to 2300 MHz, and the high frequency band may be 2300 MHz to 2690 MHz.

To better understand the technical solutions in embodiments of this application, the following describes some technical solutions in this application in detail.

FIG. 4a is a diagram of a front-end architecture 400B corresponding to an antenna 301B and an antenna 302B of an electronic device 100. The front-end architecture 400B shown in FIG. 4a includes an amplifier 401B/402B/403B, a filter 404B/405B/406B/407B/408B, and a switch component 409B. Optionally, the amplifier, the filter, and the switch component in FIG. 4a are in a form of integrated module. In other words, the amplifier, the filter, and the switch component are packaged into one electronic component. The switch component 409B supports two ports for receiving antenna signals, namely, a port 4091B and a port 4092B. The port 4091B (used as the first port) is connected to the antenna 301B (used as the first antenna), and the port 4092B (used as the second port) is connected to the antenna 302B (used as the second antenna). The port 4091B may support multion (a multion function). In other words, the port 4091B of the switch component 409B may be connected to both the filter 404B (used as the first filter) and the filter 405B (used as the second filter). Herein, the filter 404B may be a high-frequency filter, and the filter 405B may be a middle-frequency filter. The port 4091B and the filter 404B are connected at a connection point 4093B (used as the third port), and the port 4091B and the filter 405B are connected at a connection point 4094B (used as the fourth port).

For example, the antenna 301B may be an HMB antenna. In other words, a middle frequency band signal and a high frequency band signal are received and sent by a same antenna, namely, a combined antenna that combines an MB antenna with an HB antenna. In another embodiment, the front-end architecture 100B may alternatively not include the amplifier 401B/402B/403B. In addition, it may be understood that, in a process in which the antenna sends an electromagnetic wave signal, and in a process in which the antenna sends an electromagnetic wave, the port 4091B/4092B is configured to output a signal to the antenna 301B/302B. In some embodiments, the antenna 301B may alternatively be an HB antenna.

For example, the port 4091B of the switch component 409B may alternatively be connected to the filter 407B, and the filter 407B may be a middle-frequency and high-frequency filter. In other words, the filter 407B is a filter through which both a middle frequency band and a high frequency band may pass.

For example, the antenna 302B may be an MB antenna. In other words, the antenna 302B may be configured to receive and send a middle frequency band signal. The port 4092B of the switch component 409B may be connected to the filter 408B, and the filter 408B may be a middle-frequency filter.

For example, still refer to FIG. 4a. The antenna 301B may be connected to the filter 404B and the filter 405B via the port 4092B of the switch component 409B. A high frequency band signal received by the antenna 301B is transmitted to the filter 404B via the port 4092B of the switch component 409B, and after the high frequency band signal passes through the filter 404B, a high frequency band signal is obtained through filtering, and the filtered signal is transmitted to the amplifier 401B. A middle frequency band signal received by the antenna 301B is transmitted to the filter 405B via the port 4092B of the switch component 409B, and after the middle frequency band signal passes through the filter 405B, a middle frequency band signal is obtained through filtering, and the filtered signal is transmitted to the amplifier 401B. A signal amplified by the amplifier 401B may be transmitted to a baseband processor (not shown) of the electronic device 100 for processing.

For example, the antenna 302B may be connected to the filter 408B via the port 4092B of the switch component 409B. A middle frequency band signal received by the antenna 302B is transmitted to the filter 408B via the port 4092B of the switch component 409B, and after the middle frequency band signal passes through the filter 408B, a middle frequency band signal is obtained through filtering, and the filtered signal is transmitted to the amplifier 403B. A signal amplified by the amplifier 403B may be transmitted to the baseband processor (not shown) of the electronic device 100 for processing.

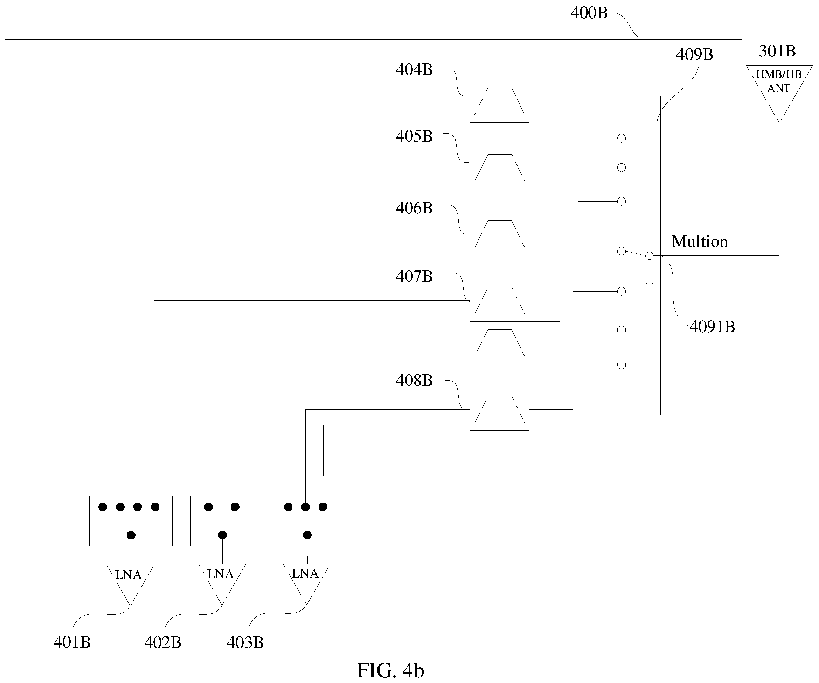

For example, refer to FIG. 4b. The electronic device 100 may include only the antenna 301B. In other words, the switch component 409B of the front-end architecture 400B may be connected to only the antenna 301B via the port 4091B. The antenna 301B herein may be an HMB antenna. In this case, the antenna 301B may be connected to the filter 407B via the port 4091B of the switch component 409B, that is, connected to a middle-frequency and high-frequency filter, and both a high frequency band signal and a middle frequency band signal received by the antenna 301B may pass through the filter 407B.

For example, as shown in FIG. 4a, the switch component 409B may include the first switch (4095B), and the port 4091B may be connected to both the connection points 4093B and 4094B via the first switch. In other words, the first port can be connected to both the third port and the fourth port. The first switch may be a double-pole double-throw switch or a double-pole multi-throw switch. The switch component 409B may further include the second switch (4096B). The port 4092B may be connected to the connection point 4093B or 4094B via the second switch. In other words, the second port is connected to at least one of the third port and the fourth port via the second switch. The second switch may be a single-pole single-throw switch or a single-pole multi-throw switch.

For example, the port 4091B of the switch component 409B may alternatively support a singleon function, namely, a function of the port 4091B of the switch component 409B to only connect one path (the switch component to connect one path). For example, an antenna connected to the port 4091B of the switch component 409B is an MB antenna, and the port 4091B of the switch component 409B is a double-pole double-throw switch. In this case, one throw in the double-pole double-throw switch of the port 4091B of the switch component 409B may be connected to the filter 405B, that is, connected to a middle-frequency filter, and the other throw in the double-pole double-throw switch may be connected to nothing, to meet a function requirement of separate MB and HB antennas.

The front-end architecture that adapts to a multi-antenna solution and that is provided in this embodiment of this application includes an amplifier, a filter, and a switch component, and the switch component, the filter, and the amplifier are in a form of integrated module. A received signal is used as an example. A signal received by the antenna may be filtered by the filter and then transmitted to the amplifier. At least one first port of the switch component supports a multion function, to meet a function requirement of multi-CA with a function of a combined MB and HB antenna. In addition, the first port may alternatively support a singleon function. In other words, the first port only connects one path, to jointly meet a function requirement of separate MB and HB antennas with the second port. For example, the first port may be connected to an HB antenna, and the second port may be connected to an MB antenna. The second port only supports the singleon function, to minimize front-end costs.

The switch component, the filter, and the amplifier in the foregoing front-end architecture are in a form of integrated module, so that the amplifier, the filter, and the switch component can be packaged into one electronic component. This reduces an area of the front-end architecture on a bottom plate of the electronic device, to reduce manufacturing costs of the electronic device. The switch component may support two or more ports. For example, the switch component includes the first port and the second port. The first port may support the multion function and a singleon function, and the second port may support only a singleon function. In this way, a quantity of switch poles of the second port can be reduced, costs of manufacturing the switch component can be reduced, and costs of implementing the front-end structure are optimal. The front-end architecture that adapts to a multi-antenna solution and that is provided in this embodiment of this application can meet a function requirement of multi-CA with a function of a combined MB and HB antenna, and optionally, can also meet a function requirement of separate MB and HB antennas. According to the front-end architecture that adapts to a plurality of antennas and that is provided in this embodiment of this application, a circuit area of the electronic device can be reduced, manufacturing costs of the front-end architecture can be reduced, and adaptability of the front-end architecture to antennas in different forms is improved.

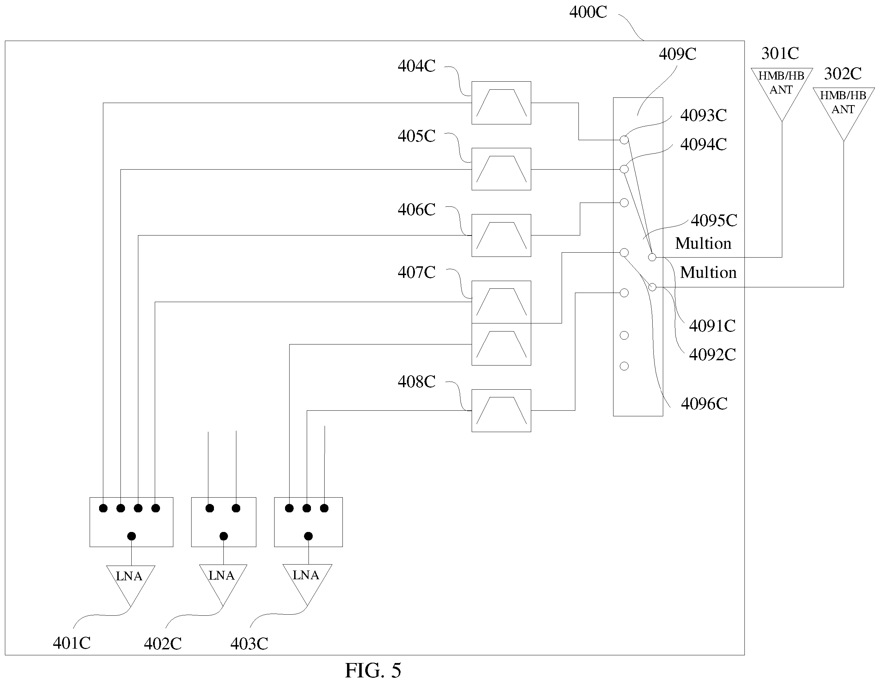

FIG. 5 is a diagram of a front-end architecture 400C corresponding to an antenna 301C and an antenna 302C of an electronic device 100. The front-end architecture 400C shown in FIG. 5 includes an amplifier 401C/402C/403C, a filter 404C/405C/406C/407C/408C, and a switch component 409C. The amplifier, the filter, and the switch component in FIG. 5 are in a form of integrated module. The switch component 409C supports two ports, namely, the port 4091C (used as the first port) and the port 4092C (used as the second port), for receiving antenna signals. The port 4091C is connected to the antenna 301C (used as the first antenna), and the port 4092C is connected to the antenna 302C (used as the second antenna). Both the port 4091C and the port 4092C may support multion (a multion function). In other words, both the port 4091C and the port 4092C of the switch component 409C may be connected to the filter 404C (used as the first filter) and the filter 405C (used as the second filter). The filter 404C may be a high-frequency filter, and the filter 405C may be a middle-frequency filter. The port 4091C and the filter 404C are connected at a connection point 4093C (used as the third port), and the port 4091C and the filter 405C are connected at a connection point 4094C (used as the fourth port).

For example, the port 4092C may alternatively be connected to a filter 407C, and the filter 407C may be a middle-frequency and high-frequency filter. Both the antenna 301C and the antenna 302C may be HMB antennas. In other words, a middle frequency band signal and a high frequency band signal are received and sent by a same antenna, namely, a combined antenna that combines an MB antenna with an HB antenna.

For example, still refer to FIG. 5. The antenna 301C may be connected to the filter 404C and the filter 405C via the port 4091C of the switch component 409C. A high frequency band signal received by the antenna 301C is transmitted to the filter 404C through the port 4091C of the switch component 409C, and a filtered signal is transmitted to the amplifier 401C. A middle frequency band signal received by the antenna 301C is transmitted to the filter 404C through the port 4091C of the switch component 409C, and a filtered signal is transmitted to the amplifier 402C. The antenna 302C may be connected to the filter 407C via the port 4091C of the switch component 409C. Middle frequency band and high frequency band signals received by the antenna 302C may be filtered by the filter 407C and then transmitted to the amplifier 403C. It may be understood that the signals that are received by the antenna 301C and the antenna 302C and then amplified may be transmitted to the baseband processor of the electronic device 100 for further processing.

For example, as shown in FIG. 5, the switch component 409C may include the first switch (4095C), and the port 4091C may be connected to both the connection points 4093C and 4094C via the first switch. In other words, the first port can be connected to both the third port and the fourth port. The first switch may be a double-pole double-throw switch or a double-pole multi-throw switch. The switch component 409C may further include the second switch (4096C). The port 4092C may be connected to the connection point 4093C and/or 4094C via the second switch. In other words, the second port is connected to at least one of the third port and the fourth port via the second switch. The second switch may be a double-pole double-throw switch or a double-pole multi-throw switch.

The switch component, the filter, and the amplifier in the foregoing front-end architecture are in a form of integrated module, so that the amplifier, the filter, and the switch component can be packaged into one electronic component. This reduces an area of the front-end architecture on a bottom plate of the electronic device, to reduce manufacturing costs of the electronic device. The switch component may be two or more ports. Both the first port and the second port may support a multion function and a singleon function. In this way, although a quantity of switch poles of the second port is increased, and consequently, costs of manufacturing the switch component are increased, the front-end architecture can adapt to more antenna combinations. The front-end architecture that adapts to a multi-antenna solution and that is provided in this embodiment of this application can meet a function requirement of multi-CA with a function of a combined MB and HB antenna, and optionally, can also meet a function requirement of separate MB and HB antennas. According to the front-end architecture that adapts to a multi-antenna solution and that is provided in this embodiment of this application, a layout area is reduced, and adaptability of the front-end architecture to terminal antennas in different forms is improved.

In some embodiments, the antenna 301C in FIG. 5 may alternatively be an HMB antenna, and the antenna 302C may be an HB antenna, or the antenna 301C may alternatively be an HB antenna, and the antenna 302C may be an HMB antenna.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

It may be understood that the carrier aggregation (CA) function in this embodiment of this application may be implemented by using various frequency bands.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features. In addition, the features illustrated in the accompanying drawings may not be drawn to scale. Correspondingly, for clarity, a size of each feature may be arbitrarily expanded or reduced. In addition, some accompanying drawings may not depict all components of a given system, method, or apparatus. Throughout this specification and the accompanying drawings, same reference signs may be used to represent same features.

In embodiments of this application, for a purpose of description, "multiplexer", "multiplexing", and the like may include "duplexer", "duplexing", and the like.

All units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving the technical problem provided in this application. In addition, to highlight an innovative part of this application, a unit/module that is not closely related to resolving the technical issues proposed in this application is not introduced in the foregoing device embodiments of this application. This does not mean that there are no other units/modules in the foregoing device embodiments.

In embodiments of this application, relational terms such as first and second are only used to distinguish one entity or operation from another, and do not necessarily require or imply that any actual relationship or sequence exists between these entities or operations. Moreover, the terms "include", "contain", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device that includes the element.

Although this application has been illustrated and described with reference to some preferred embodiments of this application, a person of ordinary skill in the art should understand that various changes may be made to this application in form and detail without departing from the spirit and scope of this application.

## Claims

1. A radio frequency front-end module, comprising:
a switch component, wherein the switch component comprises a first port, a second port, a third port, and a fourth port, the first port is configured to connect to a first antenna, and the second port is configured to connect to a second antenna; and
a first filter and a second filter, wherein an operating frequency band of the first filter is a first frequency band, an operating frequency band of the second filter is a second frequency band, the first filter is connected to the third port of the switch component, and the second filter is connected to the fourth port of the switch component;
the first port is capable of being connected to both the third port and the fourth port, to form both a connection path between the first filter and the first antenna and a connection path between the second filter and the first antenna; and
the second port is capable of being connected to at least one of the third port and the fourth port, to form a connection path between the second antenna and at least one of the first filter and the second filter.

2. The radio frequency front-end module according to claim 1, wherein an operating frequency band of the first antenna comprises the first frequency band and the second frequency band.

3. The radio frequency front-end module according to claim 1, wherein the second port is capable of being connected to the third port and the fourth port, to form both a connection path between the first filter and the second antenna and a connection path between the second filter and the second antenna.

4. The radio frequency front-end module according to claim 2, wherein the switch component comprises a first switch, the first port is connected to both the third port and the fourth port via the first switch, and the first switch is a double-pole double-throw switch or a double-pole multi-throw switch.

5. The radio frequency front-end module according to claim 1, wherein the switch component comprises a second switch, the second port is connected to at least one of the third port and the fourth port via the second switch, and the second switch is a single-pole double-throw switch or a single-pole multi-throw switch.

6. The radio frequency front-end module according to claim 1, wherein the first frequency band comprises at least one of a 2G frequency band or a 3G frequency band.

7. The radio frequency front-end module according to claim 6, wherein the second frequency band comprises at least one of a 4G frequency band or a 5G frequency band.

8. The radio frequency front-end module according to claim 1, wherein the switch component, the first filter, and the second filter are configured on a same integrated circuit.

9. An antenna system, comprising:
the radio frequency front-end module and the first antenna according to any one of claims 1 to 8, wherein the operating frequency band of the first antenna comprises the first frequency band and the second frequency band.

10. An antenna system, comprising:
the radio frequency front-end module, the first antenna, and the second antenna according to any one of claims 1 to 8, wherein the operating frequency band of the first antenna comprises the first frequency band and the second frequency band, and an operating frequency band of the second antenna comprises at least one of the first frequency band or the second frequency band.

11. An electronic device, wherein the electronic device comprises the radio frequency front-end module according to any one of claims 1 to 8.
